# FASCICULE DE BREVET EUROPEEN

(11) **EP 1 296 797 B1**
(45) Date de publication et mention de la délivrance du brevet: **13.10.2004**
(21) Numéro de dépôt: 01984097.4
(22) Date de dépôt: 05.07.2001
(51) Int. Cl.: B23K 26/02

(54) **PROCEDE DE DETECTION, DE LOCALISATION ET D'IDENTIFICATION DE DEFAUTS DANS UN CORDON DE SOUDURE REALISE PAR FAISCEAU LASER**
VERFAHREN ZUR FESTSTELLUNG, LOKALISIERUNG UND IDENTIFIZIERUNG VON FEHLERSTELLEN IN EINER SCHWEISSNAHT MIT EINEM LASERSTRAHL
METHOD FOR DETECTING, LOCATING AND IDENTIFYING DEFECTS IN A LASER BEAM WELD SEAM

(30) Priorité: 06.07.2000 FR 0008798
(43) Date de publication de la demande: 02.04.2003
(73) Titulaire: Aerospatiale Matra CCR, 75116 Paris (FR)
(72) Inventeur: ESMILLER, Bruno, F-92000 Nanterre (FR)
(74) Mandataire: Poulin, Gérard
(86) Numéro de dépôt international: PCT/FR2001/002157
(87) Numéro de publication internationale: WO 2002/002268

(56) Documents cités:
- EP-A- 0 911 109
- WO-A-00/41837
- US-A- 5 272 312
- US-A- 5 486 677
- US-A- 5 651 903
- US-A- 5 841 098

## Description

L'invention concerne un procédé conçu pour détecter, localiser et identifier, de manière non destructive et en temps réel, des défauts éventuellement présents dans des cordons de soudure réalisés par un ou plusieurs faisceaux laser conformément au préambule de la revendication 1 (voir, par example, US-A-5 651 903).

De façon plus précise, l'invention concerne un procédé de détection et d'identification de défauts qui fait appel à des capteurs optiques sensibles aux variations d'intensité lumineuse du plasma qui se forme dans la zone de soudage, sous l'action du ou des faisceaux laser.

L'invention s'applique au soudage de pièces métalliques quelconques telles que des pièces en alliage d'aluminium, en alliage de titane, en acier inoxydable, etc.. Elle peut notamment être utilisée pour contrôler le soudage bord à bord de deux tôles, le soudage d'un raidisseur sur une tôle (soudure en T), etc..

Par ailleurs, l'invention est adaptable à différentes configurations de soudage. Ainsi, elle concerne tous les types de soudage mettant en oeuvre un ou plusieurs laser, de type YAG, CO₂, etc., avec ou sans métal d'apport.

Les défauts susceptibles d'être détectés et identifiés par le procédé selon l'invention sont des défauts internes ou externes considérés comme nocifs pour le cordon de soudure. Parmi ces défauts, on citera à titre d'exemples non limitatifs le manque d'interpénétration des cordons de soudure dans le cas d'une soudure en T, les problèmes de fil d'apport, la présence de trous ou de soufflures, l'existence de défauts géométriques, etc..

### Etat de la technique

Dans l'industrie aéronautique, l'assemblage des différentes pièces telles que les tôles formant l'enveloppe extérieure (fuselage, voilure, etc.) d'un aéronef, entre elles ainsi qu'avec les raidisseurs internes, est habituellement réalisé au moyen de rivets. Le remplacement des assemblages rivetés traditionnels par des assemblages soudés constituerait un progrès notable, en particulier en termes de masse, d'aérodynamisme et de temps de fabrication.

Pour ne pas déformer les tôles de revêtement dans le cas d'un assemblage tôle-raidisseur, le remplacement des assemblages rivetés par des assemblages soudés impose l'utilisation du soudage par laser. En effet, cette technique autorise des vitesses de travail élevées sans entraîner de déformations importantes.

Dans l'hypothèse où la technique du soudage par laser serait utilisée à la place de la technique traditionnelle d'assemblage par rivets, on doit pouvoir disposer de moyens efficaces et fiables pour contrôler les cordons de soudure et identifier les défauts éventuellement détectés, afin de pouvoir y remédier rapidement. Ces moyens de contrôle doivent être non destructifs et permettre, autant que possible, une acquisition en temps réel des données permettant le contrôle, c'est-à-dire directement lors du passage de la tête de soudage.

Il existe des systèmes de contrôle ou de suivi du soudage réalisé par un ou plusieurs lasers, qui utilisent des capteurs optiques mesurant les variations de luminosité du plasma ou les variations de température du cordon de soudure. Le système de suivi commercialisé sous la dénomination JURCA «LWM900» comporte les deux types de capteurs. Le système de suivi commercialisé sous la dénomination PROMOTEC «Welding Monitor FP1000» comporte seulement des capteurs sensibles aux variations de luminosité du plasma.

Ces systèmes de suivi de soudage existants sont en majorité appliqués à l'industrie automobile et destinés au contrôle de cordons de soudure réalisés entre des pièces en acier. Les moyens de traitement des signaux délivrés par les capteurs sont conçus essentiellement en fonction de la réponse des capteurs à ce matériau. Ils sont donc totalement inadaptés à des matériaux de nature différente, et notamment aux alliages de titane ou d'aluminium utilisés dans d'autres industries telles que l'industrie aéronautique. De plus, les moyens de traitement des signaux utilisés dans ces systèmes de suivi de soudage connus ne présentent pas la précision et la fiabilité requises dans le cadre de cette dernière industrie.

Par ailleurs, les systèmes de suivi de soudage utilisés dans l'industrie automobile utilisent des capteurs encombrants, placés à proximité immédiate de la tête de soudage. Un tel agencement limite le nombre des capteurs et, par conséquent, le nombre de signaux de mesure disponibles pour assurer la détection des défauts.

Parmi les systèmes de suivi de soudage existants, on citera également les systèmes décrits dans les documents US-A-5 329 091, US-A-5 651 903 et US-A-5 272 312.

Dans le document US-A-5 329 091, le rayonnement ultraviolet du plasma produit par le faisceau laser est détecté par un capteur placé à proximité du point de soudage et muni d'un filtre approprié. Le signal analogique délivré par le capteur est comparé à un seuil et on lui donne la valeur 1 ou 0 selon qu'il est supérieur ou inférieur à ce seuil. On trie ensuite les périodes où le signal est égal à 0, selon leurs durées. Ce système permet de détecter certains défauts. Toutefois, il ne permet pas de les identifier de façon certaine et en totalité.

Dans le document US-A-5 651 903, un premier capteur optique observe les variations d'émissions ultraviolettes du plasma et un deuxième capteur optique mesure les variations de température du cordon de soudure en aval de la zone de soudage. On détermine ensuite les zones dans lesquelles les variations des signaux émis par ces deux capteurs sont maximales et, lorsque ces zones sont sensiblement les mêmes, on compare les signaux à des valeurs caractéristiques de certains défauts, pour émettre un signal d'erreur lorsqu'un défaut est détecté. Comme dans le cas précédent, ce système ne permet pas de détecter et surtout de distinguer de façon fiable tous les défauts éventuellement présents sur le cordon de soudure.

Dans le document US-A-5 272 312, on utilise deux capteurs optiques orientés vers le plasma formé par le faisceau laser et observant respectivement les rayonnements ultraviolet et infrarouge. D'éventuels défauts sont détectés en traitant individuellement le signal délivré par chacun des capteurs. La discrimination entre les différents types de défauts n'est pas assurée de façon fiable.

Dans le document US-A-5,486,677, on régule la profondeur de fusion d'une pièce soumise à l'action d'un faisceau laser à partir des signaux émis par des détecteurs sensibles aux signaux optiques émis par le plasma ou la vapeur, ou après réflexion sur un miroir. On effectue une transformation de Fourier fixe sur les signaux, pour les soumettre à une analyse de fréquence, puis les diviser en deux bandes de fréquences différentes. On dérive de chacune de ces bandes deux amplitudes moyennes et on divise l'une par l'autre, pour calculer une valeur permettant de contrôler la profondeur de fusion.

### Exposé de l'invention

L'invention a pour objet un procédé permettant de détecter et d'identifier, en temps réel et de façon fiable et reproductible, des défauts éventuellement présents dans des cordons de soudure réalisés par laser.

Conformément à l'invention, ce résultat est obtenu au moyen d'un procédé de détection et d'identification de défauts lors de la réalisation d'un cordon de soudure par au moins un faisceau laser formant un plasma dans une zone de soudage, selon lequel on acquiert en temps réel au moins deux signaux de mesure délivrés par des capteurs optiques distincts, détectant des variations d'intensité lumineuse du plasma, caractérisé en ce qu'on combine les signaux de mesure en leur appliquant au moins un opérateur mathématique adapté à la détection d'un défaut correspondant, afin d'obtenir au moins un signal combiné, on compare chaque signal combiné à un seuil prédéterminé, et on diagnostique la présence ou l'absence du défaut correspondant à chaque opérateur mathématique, selon le résultat de la comparaison.

Le demandeur a établi que la combinaison de signaux assurée par l'application de certains opérateurs mathématiques particulièrement simples permet de distinguer à volonté les différents défauts les uns des autres.

Dans un mode de réalisation préférée de l'invention, l'opérateur mathématique est choisi dans le groupe comprenant l'addition, la soustraction, la multiplication, la division et une combinaison de ces opérations.

Une première application de l'invention concerne la soudure d'un raidisseur sur une tôle par deux faisceaux laser placés de part et d'autre du raidisseur.

Dans cette application, on utilise deux groupes d'au moins un capteur optique ou deux groupes d'au moins deux capteurs optiques détectant des variations d'intensité lumineuse du plasma dans des bandes optiques différentes, disposés de part et d'autre du raidisseur, les capteurs optiques des deux groupes étant identiques.

Lorsqu'on utilise deux groupes d'au moins un capteur, on additionne de préférence les signaux de mesure délivrés par un capteur de chaque groupe et on détecte la présence d'un manque d'interpénétration des cordons de soudure dû à un manque de puissance des faisceaux laser lorsque le résultat est inférieur à un premier seuil prédéterminé.

Lorsqu'on utilise deux groupes d'au moins deux capteurs, on additionne avantageusement d'une part les signaux de mesure délivrés par une première paire de capteurs identiques et d'autre part les signaux de mesure délivrés par une deuxième paire de capteurs identiques, on multiplie l'une par l'autre les deux sommes obtenues et on détecte un manque d'interpénétration des cordons de soudure, dû à un défaut autre qu'un manque de puissance des faisceaux laser, lorsque le résultat est supérieur à un deuxième seuil prédéterminé.

Généralement, le raidisseur et la tôle sont positionnés au préalable l'un par rapport à l'autre par des points de soudure. On utilise alors de préférence deux groupes d'au moins un capteur, on divise l'un par l'autre les signaux de mesure délivrés par deux capteurs identiques et on détecte la présence de points de soudure de positionnement préalable déficients lorsque le résultat est supérieur à un troisième seuil prédéterminé.

Lorsqu'on utilise deux groupes d'au moins deux capteurs, on additionne avantageusement d'une part les signaux de mesure délivrés par une première paire de capteurs identiques et d'autre part les signaux de mesure délivrés par une deuxième paire de capteurs identiques, on divise l'une par l'autre les deux sommes obtenues, et on détecte une largeur insuffisante du cordon de soudure lorsque le résultat de la division est inférieur à un quatrième seuil prédéterminé.

Une autre application de l'invention concerne la soudure bord à bord de deux tôles par un seul faisceau laser.

Dans ce cas, on utilise avantageusement au moins deux capteurs optiques détectant des variations d'intensité lumineuse du plasma dans des bandes optiques différentes, on divise l'un par l'autre les signaux de mesure délivrés par deux des capteurs et on détecte un manque d'épaisseur du cordon de soudure lorsque le résultat obtenu est inférieur à un premier seuil et une absence de soudage lorsque le résultat est supérieur à un deuxième seuil, supérieur au premier.

Dans le mode de réalisation préféré de l'invention, on acquiert les signaux de mesure au moyen d'au moins un groupe de trois capteurs, les capteurs de chaque groupe détectant les variations d'émission lumineuse du plasma respectivement dans une bande de fréquences principalement ultraviolette, dans une bande de fréquences principalement visible et dans une bande de fréquences principalement infrarouge.

Selon un autre aspect de l'invention, on utilise des capteurs optiques, dits capteurs «plasma», comprenant chacun une fibre optique dont une première extrémité est placée à proximité de la zone de soudage, un filtre optique placé dans le prolongement de la deuxième extrémité de la fibre optique et une photodiode placée en face de la deuxième extrémité de la fibre optique, de l'autre côté du filtre.

Dans ce cas, la première extrémité de la fibre optique est placée de préférence à environ 10 cm de la zone de soudage.

Avantageusement, on acquiert un signal de mesure supplémentaire au moyen d'un autre capteur optique, appelé "capteur thermique" détectant des variations d'énergie thermique du cordon de soudure en arrière de la zone de soudage.

Dans ce cas, le capteur thermique comprend une autre fibre optique dont une première extrémité est placée en arrière de la zone de soudage et orientée vers le cordon de soudure, et une photodiode sensible au rayonnement thermique et placée dans le prolongement de la deuxième extrémité de l'autre fibre optique. Par ailleurs, un moyen optique de focalisation tel qu'une lentille est placé à la première extrémité de ladite fibre optique. La première extrémité de ladite fibre optique est alors placée de préférence à une distance comprise entre environ 10 cm et environ 20 cm de la zone de soudage. La zone de mesure de diamètre compris entre 1 et 3 mm est placée de préférence entre 5mm et 5 cm en arrière de la zone de soudage selon le matériau soudé.

Dans le mode de réalisation préféré de l'invention, on combine les signaux de mesure et on les compare auxdits seuils prédéterminés après que lesdits signaux aient été acquis en temps réel pour le cordon de soudage considéré.

Dans ce cas, on calcule avantageusement la valeur moyenne, la valeur moyenne normalisée, puis l'écart type de chaque signal de mesure, et on diagnostique une qualité irrégulière de la soudure lorsque l'écart type dépasse une valeur prédéterminée.

On peut alors ensuite comparer la valeur moyenne de chaque signal de mesure aux valeurs moyennes précédentes dudit signal, enregistrées pour un nombre donné de cordons de soudure contrôlés auparavant et on diagnostique une dérive de l'appareil de mesure lorsque la valeur moyenne du signal a varié d'environ 30%, au moins, par rapport aux valeurs moyennes précédentes.

### Brève description des dessins

On décrira à présent, à titre d'exemple non limitatif, un mode de réalisation préféré de l'invention, en se référant aux dessins annexés, dans lesquels :
- la figure 1 est une vue en perspective qui représente schématiquement un appareil de soudage laser utilisé pour le soudage d'un raidisseur sur une tôle et équipé d'un système de détection et d'identification de défauts mettant en oeuvre le procédé selon l'invention ;
- la figure 2 est une vue de côté, illustrant schématiquement la position du capteur thermique par rapport à celle des capteurs plasma ;
- la figure 3 est un organigramme expliquant les différentes étapes du traitement des signaux de mesure dans le système de détection et d'identification de défauts de la figure 1 ;
- les figures 4A à 4C sont des courbes qui illustrent, dans trois applications particulières, la comparaison de signaux de mesure combinés à des valeurs de seuil prédéterminées, effectuée conformément à l'invention.

### Exposé détaillé d'un mode de réalisation préféré de l'invention

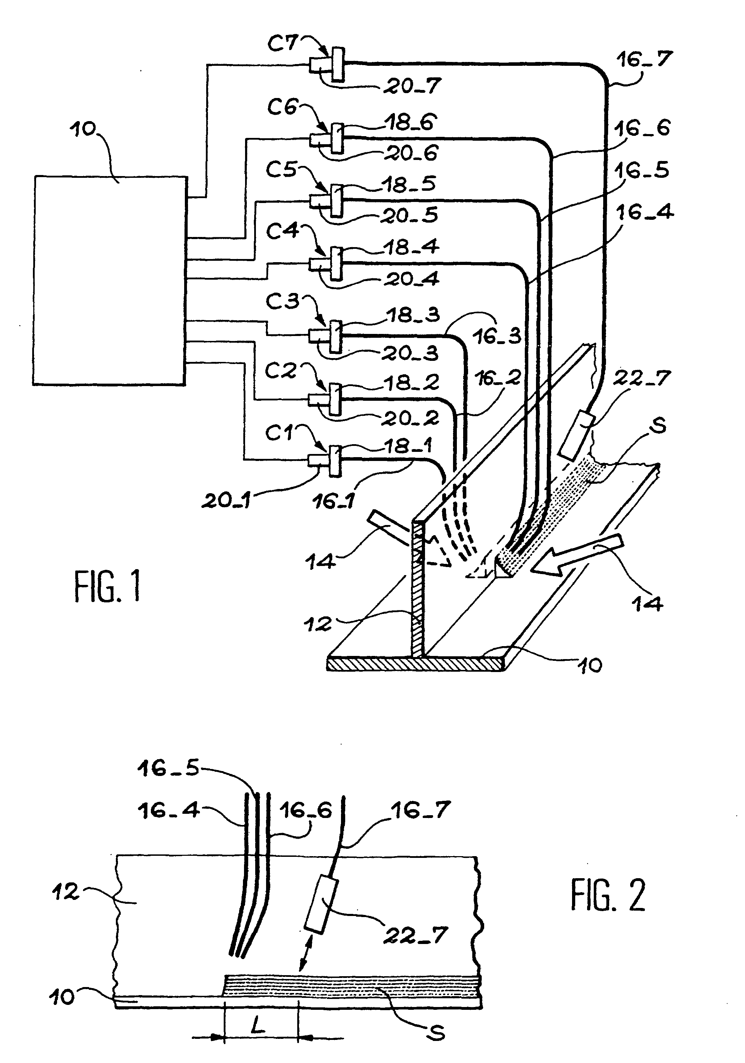

Comme l'illustre schématiquement la figure 1, l'invention concerne le contrôle non destructif et en temps réel de la qualité d'une soudure réalisée entre deux pièces 10 et 12 par un ou plusieurs lasers 14 (illustrés par des flèches sur la figure 1). Comme on l'a représenté à titre d'exemple non limitatif, la pièce 10 peut notamment être une tôle sensiblement plane ou de faible courbure et la pièce 12 un raidisseur que l'on vient souder sur la face interne de la tôle 10 au moyen de deux faisceaux laser 14 situés de part et d'autre du raidisseur 12. L'invention s'applique toutefois à d'autres types d'assemblage tels que l'assemblage bord à bord de deux tôles, etc..

Par ailleurs, les pièces 10 et 12 dont le soudage doit être contrôlé sont des pièces métalliques qui peuvent être réalisées en différents métaux tels que des alliages d'aluminium, des alliages de titane, des aciers inoxydables, etc..

Le ou les lasers 14 utilisés pour souder entre elles les pièces 10 et 12 peuvent être constitués par tous types de lasers utilisés habituellement dans l'industrie pour souder les matériaux concernés.

Selon une technique habituelle, dite de "pointage", les pièces 10 et 12 que l'on désire assembler par soudage sont généralement positionnées préalablement l'une par rapport à l'autre par des points de soudure (non représentés).

La soudure des pièces 10 et 12 est réalisée par une machine de soudage (non représentée) qui intègre une tête de soudage située à proximité des pièces 10 et 12 à souder, et des moyens pour assurer un déplacement relatif entre ladite tête de soudage et les pièces selon une ligne de soudage prédéterminée. Ces différents éléments sont bien connus de l'homme du métier et ne font pas partie de l'invention. Il n'en sera donc fait aucune description. Pour une bonne compréhension de l'invention, il est simplement rappelé ici que la tête de soudage intègre notamment des systèmes optiques permettant de diriger le ou les faisceaux laser sur la zone de soudage, un ou des dispositifs d'alimentation en métal d'apport nécessaire à la soudure et une ou plusieurs buses par lesquelles un gaz neutre tel que de l'argon ou de l'hélium est amené dans la zone de soudage.

Conformément à l'invention, on intègre à la machine de soudage un système de contrôle ou de suivi de soudure, permettant de détecter, de localiser et d'identifier en temps réel, c'est-à-dire lors du passage de la tête de soudage, d'éventuels défauts dans la soudure réalisée.

Dans le mode de réalisation préféré de l'invention illustré schématiquement sur la figure 1, le système de contrôle comprend sept capteurs optiques C1 à C7, ainsi que des moyens 10 d'acquisition et de traitement des signaux de mesure délivrés par chacun de ces capteurs. Dans d'autres applications, le nombre des capteurs optiques utilisés peut toutefois être différent de sept et constitué par un nombre quelconque supérieur ou égal à deux, sans sortir du cadre de l'invention.

Les capteurs C1 à C6 sont des capteurs dits "capteurs plasma", qui détectent des variations d'intensité lumineuse du plasma formé par les faisceaux laser 14, dans la zone du soudage. A cet effet, chacun des capteurs C1 à C6 est monté sur la tête de soudage et orienté vers le point d'impact des faisceaux laser sur les pièces 10 et 12.

Chacun des capteurs plasma C1 à C6 comprend respectivement une fibre optique 16-1 à 16-6 dont une première extrémité est située à proximité de la zone de soudage et orientée vers ladite zone, c'est-à-dire vers le point d'impact des faisceaux laser 14 sur les pièces 10 et 12. Plus précisément, les fibres optiques 16-1 à 16-3 sont situées d'un côté du raidisseur 12 et orientées vers le plasma formé par le faisceau laser 14 dirigé vers ce même côté, alors que les fibres optiques 16-4 à 16-6 sont situées de l'autre côté du raidisseur 12 et orientées vers le plasma formé par le faisceau laser 14 dirigé vers cet autre côté. Afin d'éviter les projections de métal fondu ainsi que la forte chaleur dégagée lors de la soudure, la première extrémité de chacune des fibres optiques 16-1 à 16-6 est placée à environ 10 cm de la zone de soudure.

Les fibres optiques 16-1 à 16-6 sont, par exemple, des fibres en PMMA à saut d'indice. Ce type de fibres a notamment pour avantage de présenter une importante ouverture numérique permettant d'observer l'ensemble du plasma, ainsi qu'une bonne transmission pour les longueurs d'onde observées.

Chacun des capteurs C1 à C6 comprend de plus un filtre optique respectif 18-1 à 18-6, placé dans le prolongement de l'extrémité opposée de la fibre optique correspondante. Plus précisément, les filtres optiques 18-1 et 18-4 des capteurs C1 et C4 laissent passer principalement une bande de fréquences correspondant à un rayonnement ultraviolet, les filtres 18-2 et 18-5 des capteurs C2 et C5 laissent passer principalement une bande de fréquences correspondant à un rayonnement visible et les filtres 18-3 et 18-6 laissent passer principalement une bande de fréquences correspondant à un rayonnement infrarouge.

Chacun des capteurs C1 à C6 comprend en outre, respectivement, une photodiode 20-1 à 20-6 placée en face de la deuxième extrémité de la fibre optique correspondante, de l'autre côté du filtre. Les photodiodes transforment les signaux optiques qu'elles reçoivent en signaux électriques. Ces derniers signaux constituent les signaux de mesure délivrés par les capteurs C1 à C6. Les photodiodes 20-1 à 20-6 sont, par exemple, des photodiodes en silicium sensibles dans la zone allant de 0,3 à 1,1 µm.

Dans l'agencement qui vient d'être décrit, l'utilisation des fibres optiques 16-1 à 16-6 permet de disposer d'un nombre de capteurs élevé, tout en réduisant au maximum l'encombrement du système de contrôle à proximité de la zone de soudage. En effet, les éléments relativement volumineux tels que les filtres et les photodiodes peuvent être installés en dehors de cette zone.

Cet agencement permet également d'acquérir des signaux de mesure représentant un grand nombre de grandeurs différentes (six dans l'exemple décrit ), ce qui contribue à accroître les informations permettant de détecter les défauts éventuels et de les distinguer les uns des autres.

Le septième capteur optique C7, facultatif, est un capteur dit "thermique" qui détecte des variations d'énergie thermique du cordon de soudure en arrière de la zone de soudage, c'est-à-dire en arrière du point d'impact des faisceaux laser 14 sur les pièces 10 et 12.

De façon plus précise et comme l'illustre en particulier la figure 2, le capteur thermique C7 comprend également une fibre optique 16-7. Une première extrémité de cette fibre optique 16-7 est orientée vers le cordon de soudure S formé en arrière de la zone de soudage, d'un côté du raidisseur 12. Plus précisément, la première extrémité de la fibre optique 16-7 est orientée vers un point du cordon de soudure S situé à une distance L entre environ 5 mm et environ 1 cm en arrière de la zone de soudage. En effet, les autres positions du point de mesure ne permettent pas d'obtenir des signaux exploitables..

L'extrémité de la fibre optique 16-7 tournée vers le cordon de soudure S est équipée d'un moyen de focalisation 22-7, tel qu'une lentille de focale 20 mm, permettant de limiter la zone d'observation du capteur C7 à un cercle de 1 à 3 mm de diamètre environ, et de placer l'extrémité de la fibre équipée de son système de focalisation entre 10 et 20 cm de la zone de soudage.

La fibre optique 16-7 est une fibre en silice ayant une faible atténuation dans le proche infrarouge (entre 1 et 1,8 µm ). Une photodiode 20-7 est placée en face de l'extrémité opposée de la fibre optique 16-7. Cette photodiode 20-7 transforme les signaux optiques acheminés par la fibre optique 16-7 en signaux électriques, qui constituent également des signaux de mesure conformément à l'invention. La réponse spectrale de la photodiode 20-7 varie, par exemple, entre 0,8 et 1,8 µm. Dans ce cas, un filtre optique 18-7 est également interposé entre la fibre optique 16-7 et la photodiode 20-7, pour bloquer le rayonnement de longueur d'onde inférieure à 1 µm, afin que le capteur C7 ne voie pas la lumière émise par le plasma.

Un filtre électronique passe bande (non représenté) est placé à la sortie de chacune des photodiodes 20-1 à 20-7, afin de supprimer d'éventuels parasites dans les signaux traités.

Les signaux de mesure délivrés par chacun des capteurs C1 à C7 sont transmis aux moyens 10 d'acquisition et de traitement. Ces moyens, qui intègrent notamment un ordinateur, peuvent être implantés en un lieu quelconque, à proximité ou non de la tête de soudage.

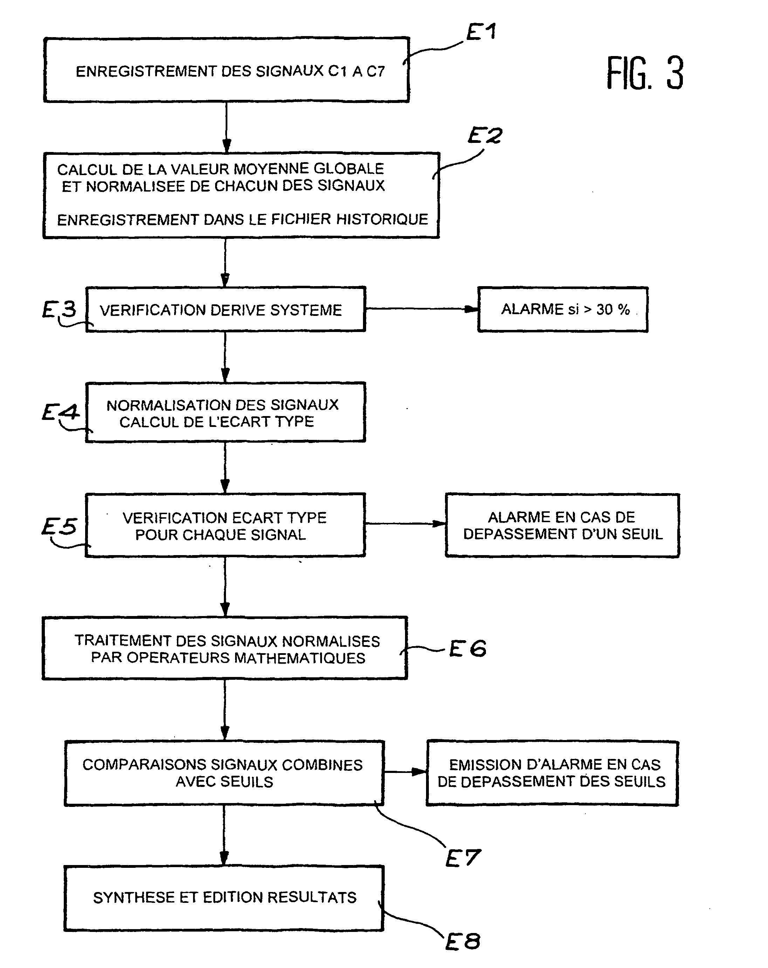

Comme l'illustre schématiquement la figure 3,. les moyens 10 d'acquisition et de traitement des signaux de mesure effectuent successivement un certain nombre d'opérations qui vont à présent être décrites en détail.

Lors d'une première étape E1, qui s'effectue simultanément à la réalisation des cordons de soudure S par les faisceaux laser 14, on enregistre les sept signaux de mesure délivrés par les capteurs C1 à C7.

Une seconde étape, illustrée en E2 sur la figure 3, est mise en oeuvre lorsque les cordons de soudure S sont terminés. A ce stade, on calcule, pour chacun des signaux de mesure, la valeur moyenne globale de ce signal sur toute la durée de la mesure correspondant à la réalisation des cordons de soudure S considérés. On calcule ensuite la valeur moyenne normalisée de chaque signal de mesure, en ramenant ce signal à l'unité. On s'affranchit ainsi, notamment, des problèmes découlant de décalages dans les mesures dus à des différences de positionnement relatif des capteurs. La valeur moyenne globale et la valeur moyenne normalisée de chacun des signaux sont enregistrées dans un fichier dans lequel est gardé en mémoire l'historique de tous les contrôles effectués.

Lors d'une étape E3, on vérifie qu'il n'existe pas de dérive inacceptable du système de contrôle. A cet effet, la valeur moyenne globale de chacun des signaux de mesure, qui vient d'être calculée, est comparée aux valeurs moyennes globales de ces signaux enregistrées lors d'un certain nombre de mesures correspondantes effectuées précédemment. A titre d'exemple, on compare les cinq dernières valeurs enregistrées. Lorsque cette comparaison révèle une dérive supérieure à un seuil prédéterminé (par exemple, 30%), l'opérateur en est averti par le déclenchement d'une alarme. Cette alarme peut prendre une forme quelconque (visuelle, sonore, etc.).

Lors de l'étape suivante, identifiée par la référence E4 sur la figure 3, chacun des sept signaux de mesure est normalisé. Cette opération est effectuée en divisant la valeur instantanée de chaque signal par la valeur moyenne de ce signal calculée à l'étape E2. On détermine ensuite l'écart type pour chacun des signaux de mesure, à partir des signaux normalisés.

Lors de l'étape E5 suivante, on vérifie que la valeur de l'écart type de chaque signal de mesure qui vient d'être calculée ne dépasse pas un seuil prédéterminé propre à ce signal. Si ce seuil est dépassé, l'opérateur en est averti par l'émission d'une alarme sous une forme quelconque appropriée (sonore, visuelle, etc.). En effet, le dépassement de ce seuil révèle une qualité de soudure qui varie de façon excessive sur toute sa longueur.

Le programme passe ensuite à une étape E6, essentielle selon l'invention, au cours de laquelle les différents signaux de mesure normalisés sont traités de façon à détecter, localiser et identifier les différents défauts éventuellement présents dans la soudure qui vient d'être réalisée.

Au cours de cette étape E6 on applique au moins un opérateur mathématique simple à un ou plusieurs groupes d'au moins deux signaux de mesure normalisés, de façon à obtenir un ou plusieurs signaux combinés. Chaque opérateur et le groupe de signaux auquel il est appliqué sont propres à la détection d'un type de défaut particulier, comme l'illustreront les exemples qui seront décrits par la suite.

Chaque signal combiné obtenu par l'application d'un opérateur particulier est ensuite comparé, en E7, à un seuil prédéterminé, qui dépend également de l'opérateur et, par conséquent, du type de défaut à détecter. Lorsque le signal combiné franchit ce seuil (c'est-à-dire lorsqu'il devient supérieur à ce seuil lorsque celui-ci correspond à une valeur maximale ou lorsqu'il devient inférieur à ce seuil lorsque celui-ci correspond à une valeur minimale), l'opérateur est informé de la survenance d'une anomalie, de l'emplacement du défaut et de la nature de celui-ci. Cette information peut être assurée par un moyen quelconque tel qu'une alarme visuelle, sonore ou autre, un affichage, etc..

Les résultats obtenus par l'application de ces différents traitements sont enfin édités sous la forme d'un rapport de synthèse comme indiqué en E8 sur la figure 3. Le rapport de synthèse indique notamment si la soudure est acceptable ou non, si certains réglages doivent être modifiés sur la machine de soudage, etc..

Dans le cas particulier, illustré sur les figures 1 et 2, du soudage d'un raidisseur 12 sur une tôle 10 différents traitements susceptibles d'être effectués à l'étape E7 vont à présent être décrits à titre d'exemples, lorsqu'on dispose des sept capteurs C1 à C7.

Selon un premier traitement, on additionne les signaux de mesure normalisés dérivés des capteurs C1 et C4 ou des capteurs C2 et C5. L'opérateur est donc une simple addition. On compare ensuite le signal combiné obtenu à un seuil prédéterminé. Si la somme précédemment calculée est inférieure à ce seuil sur une partie au moins de la longueur des cordons de soudure S, cela signifie qu'il existe dans cette zone un manque d'interpénétration de ces cordons de soudure et que ce défaut a pour origine un manque de puissance des faisceaux laser. Cette information est alors portée à la connaissance de l'opérateur, sous une forme quelconque appropriée.

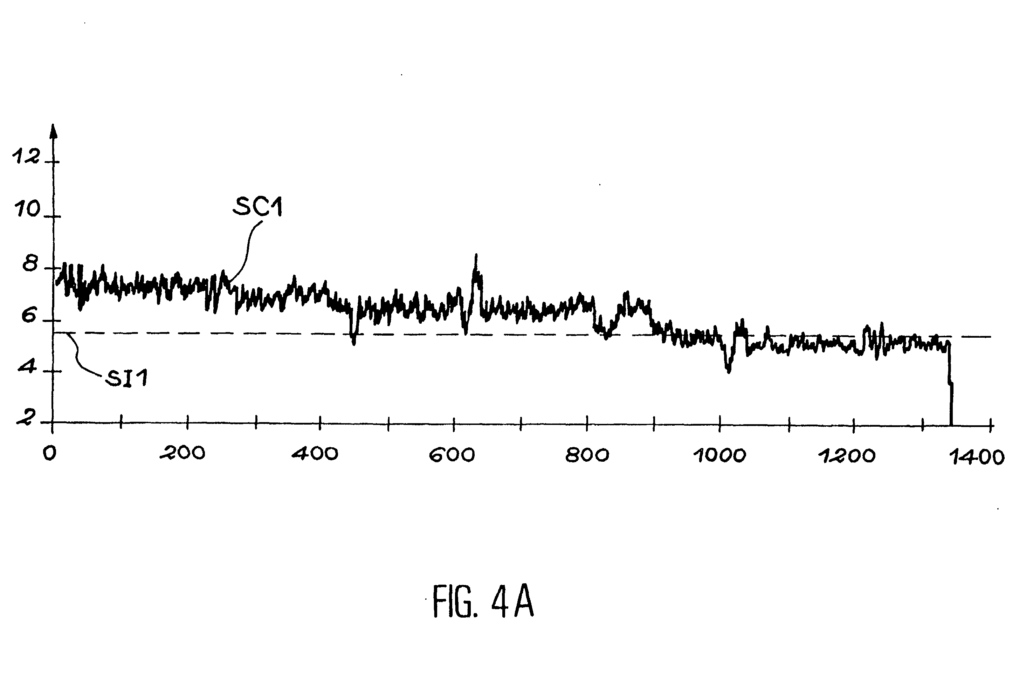

La figure 4A est une courbe obtenue lors d'un essai, en appliquant ce premier traitement sur la base des signaux de mesure normalisés issus des capteurs C1 et C4. Sur cette courbe, on a porté en abscisses la distance (en mm) parcourue le long du cordon de soudure et en ordonnées le signal combiné SC1 correspondant à la somme des signaux de mesure normalisés issus des capteurs C1 et C4. On voit que ce signal combiné SC1 devient inférieur au seuil inférieur SI1 dans la partie des cordons de soudure située entre 900 mm et1350 mm. On en déduit que l'interpénétration des cordons est insuffisante dans cette zone, en raison d'un manque de puissance des faisceaux laser.

Selon un deuxième traitement, on applique aux signaux de mesure normalisés issus des capteurs C1,C2,C4 et C5 un opérateur mathématique qui additionne d'une part les signaux issus des capteurs C1 et C4 et d'autre part les signaux issus des capteurs C2 et C5, puis multiplie l'une par l'autre les deux sommes. Le signal combiné obtenu en appliquant cet opérateur est ensuite comparé à un deuxième seuil prédéterminé. Si ce seuil est dépassé, on en déduit qu'il existe un manque d'interpénétration des deux cordons de soudure S dû à un problème autre que le manque de puissance des faisceaux laser. Cet autre problème peut être, par exemple, un manque de métal d'apport. Comme dans le cas précédent, l'information correspondante est portée à la connaissance de l'utilisateur.

Selon un troisième traitement, on applique aux signaux de mesure normalisés issus des capteurs C1 et C4 un opérateur constitué par une division. En d'autres termes, on divise le signal de mesure normalisé issu du capteur C1 par le signal de mesure normalisé issu du capteur C4. Le signal combiné ainsi obtenu est ensuite comparé à un troisième seuil supérieur. Si la comparaison révèle que le signal combiné dépasse ce troisième seuil, on en déduit que le "pointage" des pièces est déficient. L'information correspondante est portée à la connaissance de l'utilisateur sous une forme quelconque appropriée.

Enfin, selon un quatrième traitement, on calcule d'une part la somme des signaux de mesure normalisés issus des capteurs C1 et C4 et, d'autre part, la somme des signaux de mesure normalisés issus des capteurs C2 et C5. On divise ensuite la première de ces sommes par la deuxième, après quoi on compare le signal combiné obtenu à un quatrième seuil inférieur. Lorsque cette comparaison révèle que le signal combiné ainsi calculé est inférieur à ce quatrième seuil, on en déduit que les cordons de soudure S sont trop étroits. L'information correspondante est portée à la connaissance de l'utilisateur sous une forme quelconque appropriée.

Le même défaut peut être détecté en appliquant un opérateur comparable au précédent, dans lequel les deux sommes sont remplacées par deux multiplications. On compare alors le signal combiné obtenu en divisant l'un par l'autre les résultats de ces deux multiplications avec un autre seuil inférieur prédéterminé.

Comme on l'a déjà indiqué, l'invention s'applique également à d'autres types de soudage. Ainsi, elle peut aussi être utilisée dans le cas du soudage bord à bord de deux tôles par un seul faisceau laser.

Dans ce cas, on utilise par exemple au moins deux capteurs plasma, qui détectent des variations d'intensité lumineuse du plasma dans des bandes optiques différentes. Les signaux de mesure normalisés issus de ces capteurs peuvent alors être divisés l'un par l'autre pour fournir un signal combiné, que l'on compare ensuite à un seuil inférieur prédéterminé et/ou à un seuil supérieur prédéterminé.

Lorsque le signal combiné est inférieur au seuil inférieur, on en déduit que le cordon de soudure présente une partie en creux dans la zone concernée. Lorsque au contraire le signal combiné est supérieur au seuil supérieur, on en déduit que le cordon de soudure est incomplet.

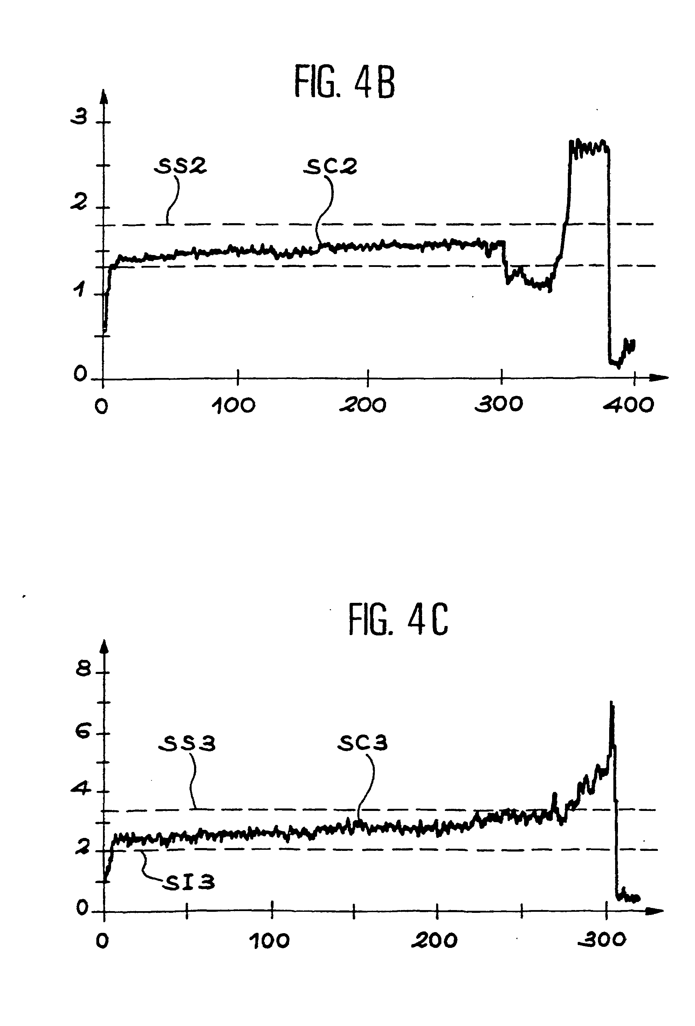

Les figures 4B et 4C illustrent les résultats d'essais effectués respectivement lors du soudage bord à bord de deux tôles d'acier inoxydable et lors du soudage bord à bord de deux tôles en alliage de titane. Dans les deux cas, le soudage a été réalisé par un laser CO₂. Comme sur la figure 4A, on a porté en abscisses la distance (en mm) le long du cordon de soudure et en ordonnées la valeur du rapport de signaux correspondant au signal combiné.

Dans le cas de la figure 4B, le signal combiné SC2 est inférieur au seuil inférieur prédéterminé entre 301 mm et 340 mm et supérieur au seuil supérieur prédéterminé SS2 de 340 mm à 392 mm. On en déduit que le cordon de soudure présente une partie en creux dans la première zone et une partie non soudée dans la deuxième zone.

Dans le cas de la figure 4C, le signal combiné SC3 dépasse le seuil supérieur prédéterminé SS3 dans la partie du cordon de soudure correspondant à une distance supérieure à 270 mm. On en déduit que le cordon de soudure est incomplet dans cette zone.

De façon générale, l'opérateur mathématique utilisé conformément à l'invention est un opérateur simple constitué par une addition, une soustraction, une multiplication, une division ou une combinaison quelconque de ces différentes opérations. Le nombre des capteurs utilisés peut également être un nombre quelconque, supérieur ou égal à deux.

## Revendications

1. Procédé de détection, de localisation et d'identification de défauts lors de la réalisation d'un cordon de soudure (S) par au moins un faisceau laser (14) formant un plasma dans une zone de soudage, selon lequel on acquiert en temps réel au moins deux signaux de mesure délivrés par des capteurs optiques (C1-C6) distincts, détectant des variations d'intensité lumineuse du plasma, **caractérisé en ce qu'**on combine, pour chacun des défauts à détecter, localiser et à identifier, les au moins deux signaux de mesure délivrés par les capteurs optiques (C1-C6) en leur appliquant au moins un opérateur mathématique adapté à la détection d'un défaut correspondant, afin d'obtenir au moins un signal combiné, on compare chaque signal combiné à un seuil prédéterminé associé au défaut correspondant, et on diagnostique la présence ou l'absence du défaut correspondant à chaque opérateur mathématique, selon le résultat de la comparaison.

2. Procédé selon la revendication 1, dans lequel l'opérateur mathématique est choisi dans le groupe comprenant l'addition, la soustraction, la multiplication, la division et une combinaison de celles-ci.

3. Procédé selon la revendication 2, appliqué à la soudure d'un raidisseur (12) sur une tôle (10) par deux faisceaux laser (14) placés de part et d'autre du raidisseur, dans lequel on utilise deux groupes d'au moins un capteur optique (C1,C2,C3;C4,C5,C6) disposés de part et d'autre du raidisseur, les capteurs optiques des deux groupes étant identiques, on additionne les signaux de mesure délivrés par un capteur de chaque groupe et on détecte la présence d'un manque d'interpénétration des cordons de soudure dû à un manque de puissance des faisceaux laser lorsque le résultat est inférieur à un premier seuil prédéterminé.

4. Procédé selon l'une quelconque des revendications 2 et 3, appliqué à la soudure d'un raidisseur (12) sur une tôle (10) par deux faisceaux laser (14) placés de part et d'autre du raidisseur, dans lequel on utilise deux groupes d'au moins deux capteurs optiques (C1,C2,C3 ;C4,C5,C6) détectant des variations d'intensité lumineuse du plasma dans des bandes optiques différentes, disposés de part et d'autre du raidisseur, les capteurs optiques des deux groupes étant identiques, on additionne d'une part les signaux de mesure délivrés par une première paire de capteurs identiques et d'autre part les signaux de mesure délivrés par une deuxième paire de capteurs identiques, on multiplie l'une par l'autre les deux sommes obtenues et on détecte un manque d'interpénétration des cordons de soudure, dû à un défaut autre qu'un manque de puissance des faisceaux laser, lorsque le résultat est supérieur à un deuxième seuil prédéterminé.

5. Procédé selon l'une quelconque des revendications 2 à 4, appliqué à la soudure d'un raidisseur (12) sur une tôle (10) par deux faisceaux laser (14) placés de part et d'autre du raidisseur, le raidisseur et la tôle étant positionnés au préalable l'un par rapport à l'autre par des points de soudure, dans lequel on utilise deux groupes d'au moins un capteur optique (C1,C2,C3;C4,C5,C6) disposés de part et d'autre du raidisseur, les capteurs optiques des deux groupes étant identiques, on divise l'un par l'autre les signaux de mesure délivrés par deux capteurs identiques et on détecte la présence de points de soudure de positionnement préalable déficients lorsque le résultat est supérieur à un troisième seuil prédéterminé.

6. Procédé selon l'une quelconque des revendications 2 à 5, appliqué à la soudure d'un raidisseur (12) sur une tôle (10) par deux faisceaux laser (14) placés de part et d'autre du raidisseur, dans lequel on utilise deux groupes d'au moins deux capteurs optiques (C1,C2,C3;C4,C5,C6) détectant des variations d'intensité lumineuse du plasma dans des bandes optiques différentes, disposés de part et d'autre du raidisseur, les capteurs optiques des deux groupes étant identiques, on additionne d'une part les signaux de mesure délivrés par une première paire de capteurs identiques et d'autre part les signaux de mesure délivrés par une deuxième paire de capteurs identiques, on divise l'une par l'autre les deux sommes obtenues, et on détecte une largeur insuffisante du cordon de soudure lorsque le résultat de la division est inférieur à un quatrième seuil prédéterminé.

7. Procédé selon l'une quelconque des revendications 1 et 2, appliqué à la soudure bord à bord de deux tôles par un seul faisceau laser, dans lequel on utilise au moins deux capteurs optiques détectant des variations d'intensité lumineuse du plasma dans des bandes optiques différentes, on divise l'un par l'autre les signaux de mesure délivrés par deux des capteurs et on détecte un manque d'épaisseur du cordon de soudure lorsque le résultat obtenu est inférieur à un premier seuil et une absence de soudage lorsque le résultat est supérieur à un deuxième seuil, supérieur au premier.

8. Procédé selon l'une quelconque des revendications précédentes, dans lequel on acquiert les signaux de mesure au moyen d'au moins un groupe de trois capteurs (C1,C2,C3;C4,C5,C6), les capteurs de chaque groupe détectant les variations d'émission lumineuse du plasma respectivement dans une bande de fréquences principalement ultraviolette, dans une bande de fréquences principalement visible et dans une bande de fréquences principalement infrarouge.

9. Procédé selon l'une quelconque des revendications précédentes, dans lequel on utilise des capteurs optiques (C1,C2,C3;C4,C5,C6)comprenant chacun une fibre optique (16-1 à 16-6) dont une première extrémité est placée à proximité de la zone de soudage, un filtre optique (18-1 à 18-6) placé dans le prolongement de la deuxième extrémité de la fibre optique et une photodiode (20-1 à 20-6) placée en face de la deuxième extrémité de la fibre optique, de l'autre côté du filtre.

10. Procédé selon la revendication 9, dans lequel la première extrémité de la fibre optique est placée à environ 10 cm de la zone de soudage.

11. Procédé selon l'une quelconque des revendications précédentes, dans lequel on acquiert un signal de mesure supplémentaire au moyen d'un autre capteur optique (C7), détectant des variations d'énergie thermique du cordon de soudure en arrière de la zone de soudage.

12. Procédé selon la revendication 11, dans lequel l'autre capteur optique (C7) comprend une autre fibre optique (16-7) dont une première extrémité est placée en arrière de la zone de soudage et orientée vers le cordon de soudure, et une photodiode (20-7) sensible au rayonnement thermique et placée dans le prolongement de la deuxième extrémité de l'autre fibre optique.

13. Procédé selon la revendication 12, dans lequel la première extrémité de l'autre fibre optique (16-7) est placée à une distance comprise entre environ 10 cm et environ 20 cm, de la zone de soudage.

14. Procédé selon l'une quelconque des revendications 12 et 13, dans lequel un moyen optique de focalisation (22-7) est placé à la première extrémité de l'autre fibre optique (16-7).

15. Procédé selon l'une quelconque des revendications précédentes, dans lequel on combine les signaux de mesure et on les compare auxdits seuils prédéterminés après que lesdits signaux aient été acquis en temps réel pour le cordon de soudage considéré.

16. Procédé selon la revendication 15, dans lequel on calcule la valeur moyenne, la valeur moyenne normalisée, puis l'écart type de chaque signal de mesure, et on diagnostique une qualité irrégulière de la soudure lorsque l'écart type dépasse une valeur prédéterminée.

17. Procédé selon la revendication 16, dans lequel on compare la valeur moyenne de chaque signal de mesure aux valeurs moyennes précédentes dudit signal, enregistrées pour un nombre donné de cordons de soudure contrôlés auparavant et on diagnostique une dérive de l'appareil de mesure lorsque la valeur moyenne du signal a varié d'environ 30%, au moins, par rapport aux valeurs moyennes précédentes.

## Patentansprüche

1. Verfahren zur Erfassung, Lokalisierung und Identifizierung von Fehlern bei der Herstellung einer Schweißnaht bzw. Schweißraupe (S) durch mindestens einen ein Plasma in einer Schweißzone bildenden Laserstrahl (14), wobei in Echtzeit mindestens zwei Messsignale erfasst werden, die von unterschiedlichen Messfühlern (C1-C6) geliefert werden, welche die Variationen der Lichtintensität des Plasmas erfassen,
**dadurch gekennzeichnet, dass** für jeden der zu erfassenden, zu lokalisierenden und zu identifizierenden Fehler die von den optischen Messfühlern (C1-C6) gelieferten mindestens zwei Messsignale kombiniert werden, indem auf sie mindestens ein mathematischer Operator, der zur Erfassung eines entsprechenden Fehlers geeignet ist, angewandt wird, um mindestens ein kombiniertes Signal zu erhalten, jedes kombinierte Signal mit dem dem entsprechenden Fehler zugeordneten Schwellenwert verglichen und das Vorhandensein oder Nichtvorhandensein des jedem mathematischen Operator entsprechenden Fehlers je nach dem Resultat des Vergleichs diagnostiziert wird.

2. Verfahren nach Anspruch 1, wobei der mathematische Operator aus der Addition, Subtraktion, Multiplikation, Division und eine Kombination derselben umfassenden Gruppe ausgewählt wird.

3. Verfahren nach Anspruch 2, angewandt auf das Schweißen eines Verstärkungs- bzw. Versteifungselements (12) auf ein Blech (10) durch zwei auf beiden Seiten des Verstärkungselements plazierte Laserstrahlen (14), wobei zwei Gruppen mindestens eines optischen Messfühlers (C1,C2,C3;C4,C5,C6) verwendet werden, die auf beiden Seiten des Verstärkungselements angeordnet werden, wobei die optischen Messfühler der beiden Gruppen identisch sind, die von einem Messfühler jeder Gruppe gelieferten Mess-Signale addiert werden und das Vorhandensein einer fehlenden gegenseitigen Durchdringung der Schweißnähte infolge eines Leistungsmangels der Laserstrahlen erfasst wird, wenn das Ergebnis unter einem ersten vorbestimmten Schwellenwert liegt.

4. Verfahren nach einem der Ansprüche 2 oder 3, angewandt auf das Schweißen eines Verstärkungs- bzw. Versteifungselements (12) auf ein Blech (10) durch zwei auf beiden Seiten des Verstärkungselements plazierte Laserstrahlen (14), bei dem zwei Gruppen von mindestens zwei optischen Messfühlern (C1,C2,C3;C4,C5,C6) verwendet werden, welche Variationen der Lichtintensität des Plasmas in unterschiedlichen optischen Bändern erfassen und auf beiden Seiten des Verstärkungselements angeordnet sind, wobei die optischen Messfühler der beiden Gruppen identisch sind, und bei demeinerseits die von einem ersten Paar identischer Messfühler gelieferten Messsignale und andererseits die von einem zweiten Paar identischer Messfühler gelieferten Messsignale addiert werden, die beiden erhaltenen Summen miteinander multipliziert werden und eine mangelhafte gegenseitige Durchdringung der Schweißraupen bzw. Schweißnähte infolge eines anderen Mangels als eines Leistungsmangels der Laserstrahlen erfasst wird, wenn das Ergebnis über einem zweiten vorbestimmten Schwellenwert liegt.

5. Verfahren nach einem der Ansprüche 2 bis 4, angewandt auf das Schweißen eines Verstärkungs- bzw. Versteifungselements (12) auf ein Blech (10) durch zwei auf beiden Seiten des Verstärkungselements plazierte Laserstrahlen (14), bei dem das Versteifungs- bzw. Verstärkungselement und das Blech vorab durch Schweißpunkte in bezug aufeinander positioniert werden, bei dem zwei Gruppen mindestens eines optischen Messfühlers (C1,C2,C3;C4,C5,C6) verwendet werden, die auf beiden Seiten des Verstärkungselements angeordnet werden, wobei die optischen Messfühler der beiden Gruppen identisch sind, die von den beiden identischen Messfühlern gelieferten Messsignale durcheinander dividiert werden und das Vorhandensein von mangelhaften vorab positionierten Schweißpunkten erfasst wird, wenn das Ergebnis über einem vorbestimmten dritten Schwellenwert liegt.

6. Verfahren nach einem der Ansprüche 2 bis 5, angewandt auf das Schweißen eines Verstärkungs- bzw. Versteifungselements (12) auf ein Blech (10) durch zwei auf beiden Seiten des Verstärkungselements plazierte Laserstrahl (14), bei dem zwei Gruppen von mindestens zwei optischen Messfühlern (C1,C2,C3;C4,C5,C6) verwendet werden, welche Variationen der Lichtintensität des Plasmas in unterschiedlichen optischen Bändern erfassen und auf beiden Seiten des Verstärkungselements angeordnet sind, und bei dem die optischen Messfühler der beiden Gruppen identisch sind, wobei einerseits die von einem ersten Paar identischer Messfühler gelieferten Messsignale und andererseits die von einem zweiten Paar identischer Messfühler gelieferten Messsignale addiert werden, die beiden erhaltenen Summen durcheinander dividiert werden und eine ungenügende Breite der Schweißnaht erfasst wird, wenn das Ergebnis der Division unter einem vorbestimmten vierten Schwellenwert liegt.

7. Verfahren nach einem der Ansprüche 1 oder 2, angewandt auf das Stoß-Schweißen von zwei Blechen durch einen einzigen Laserstrahl, wobei mindestens zwei optische Messfühler verwendet werden; welche Variationen der Lichtintensität des Plasmas in unterschiedlichen optischen Bändern erfassen, die von den beiden Messfühlern gelieferten Messsignale durcheinander dividiert werden und eine mangelhafte Dicke der Schweißnaht, wenn das erhaltene Resultat unter einem ersten Schwellenwert liegt, sowie eine fehlende Schweißnaht, wenn das Resultat über einem zweiten, über dem ersten Schwellenwert liegenden Schwellenwert liegt, erfasst wird.

8. Verfahren nach einem der vorangehenden Ansprüche, wobei die Messsignale mittels mindestens einer Gruppe aus drei Messfühlern (C1,C2,C3;C4,C5,C6) erhalten werden, die Messfühler jeder Gruppe Variationen der Lichtemission des Plasmas jeweils in einem hauptsächlich ultravioletten Frequenzband, in einem hauptsächlich sichtbaren Frequenzband und in einem hauptsächlich infraroten Frequenzband erfassen.

9. Verfahren nach einem der vorangehenden Ansprüche, wobei optische Messfühler (C1,C2,C3;C4,C5,C6) verwendet werden, von denen jeder eine Optikfaser (16-1 bis 16-6), von der ein erstes Ende in Nähe der Schweißzone plaziert wird, ein optisches Filter (18-1 bis 18-6), das in der Verlängerung des zweiten Endes der Optikfaser plaziert wird, sowie eine Photodiode (20-1 bis 20-6), die gegenüber dem zweiten Ende der Optikfaser auf der anderen Seite des Filters plaziert wird, umfasst.

10. Verfahren nach Anspruch 9, wobei das erste Ende der Optikfaser etwa 10 cm von der Schweißzone plaziert wird.

11. Verfahren nach einem der vorangehenden Ansprüche, wobei ein zusätzliches Messsignal mittels eines zusätzlichen optischen Messfühlers (C7) erhalten wird, der Variationen von Wärmeenergie der Schweißnaht hinter der Schweißzone erfasst.

12. Verfahren nach Anspruch 11, wobei der weitere optische Messfühler (C7) eine zusätzliche optische Faser (16-7) aufweist, von der ein erstes Ende hinter der Schweißzone plaziert wird und zur Schweißnaht hin ausgerichtet wird, sowie eine gegenüber Wärmestrahlung empfindliche Diode (20-7), die in der Verlängerung des zweiten Endes der zusätzlichen Optikfaser plaziert wird.

13. Verfahren nach Anspruch 12, wobei das erste Ende der zusätzlichen Optikfaser (16-7) in einem Abstand plaziert wird, der zwischen etwa 10 cm und etwa 20 cm von der Schweißzone liegt.

14. Verfahren nach einem der Ansprüche 12 oder 13, wobei ein optisches Fokussierungsmittel (22-7) am ersten Ende der zusätzlichen optischen Faser (16-7) plaziert wird.

15. Verfahren nach einem der vorangehenden Ansprüche, wobei die Messsignale kombiniert und mit vorbestimmten Schwellwerten verglichen werden, nachdem die Signale in Echtzeit für die in Frage kommende Schweißnaht erhalten wurden.

16. Verfahren nach Anspruch 15, wobei der Mittelwert, der normalisierte Mittelwert und dann die typische Abweichung jedes Messsignals berechnet werden und eine unregelmäßige Qualität der Schweißnaht diagnostiziert wird, wenn die typische Abweichung einen vorbestimmten Wert überschreitet.

17. Verfahren nach Anspruch 16, wobei der Mittelwert jedes Messsignals mit vorhergehenden Mittelwerten des Signals verglichen, für eine gegebene Anzahl von vorher kontrollierten Schweißnähten aufgezeichnet und eine Abweichung der Messvorrichtung diagnostiziert wird, wenn der Mittelwert des Signals um mindestens etwa 30% in bezug auf die vorrangehenden Mittelwerte abgewichen ist.

## Claims

1. A method for detecting, locating and identifying defects at the time of realizing a welding seam (6) by means of a laser beam (14) forming a plasma in a welding region, according to which at least two measurement signals are acquired in real time, said signals being supplied by distinct optical sensors (C1-C6) that detect the variations in luminous intensity of the plasma, **characterized in that** the at least two measurement signals supplied by the optical sensor (C1-C6) are combined for each of the defects to be detected, located and identified by applying to them at least one mathematical operator suitable for detecting a corresponding defect, in order to obtain at least one combined signal; each combined signal is compared to a predefined threshold associated with the corresponding defect and the presence or absence of a defect is diagnosed that corresponds to each mathematical operator according to the result of the comparison.

2. A method according to claim 1 in which the mathematical operator is chosen from the group comprising addition, subtraction, multiplication, division and a combination thereof.

3. A method according to claim 2 applied to welding of a stiffener (12) onto a metal plate (1) using two laser beams (14) arranged on either side of the stiffener, wherein two groups of at least one optical sensor (C1, C2, C3; C4, C5, C6) are used and disposed on either side of the stiffener; said optical sensors of the two groups being identical, the measurement signals supplied by one sensor of each group are added and the presence of an insufficient interpenetration of the welding seams owing to insufficient laser beam power is detected when the result is lower than a predefined first threshold.

4. A method according to any one of Claims 2 and 3, applied to welding of a stiffener (12) onto a metal plate (10) using two laser beams arranged on either side of the stiffener, wherein two groups of at least two optical sensors (C1, C2, C3 ; C4, C5, C6) are used and detecting variations in luminous intensity of the plasma in different optical bands; said optical sensors of the two groups being identical, the measurement signals supplied on the one hand by a first pair of identical sensors are added and on the other hand the measurement signals supplied by a second pair of identical sensors are added ; the one sum is multiplied by the other sums so obtained and an inadequate interpenetration of the welding seams is detected, which due to a defect other than insufficient laser beam power, when the result is greater than a predefined second threshold.

5. A method according to any one of Claims 2 to 4, applied to soldering of a stiffener (12) onto a metal plate (10) using two laser beams (14) arranged on either side of the stiffener, the stiffener and the metal plate being positioned in advance relative to each other by welding points, wherein two groups of at lest one optical sensor (C1, C2, C3 ; C4, C5, C6) are used and disposed on either side of the stiffener, the one of the two groups of optical sensors of being identical, the measurement signals supplied by two identical sensors being divided by each other and the presence of previously positioned welding points being detected as deficient, when the result is greater than the third predefined threshold.

6. A method according to any one of Claims 2 to 5, applied to welding of a stiffener (12) onto a metal plate (10) using two laser beams (14) placed on either side of the stiffener, wherein two groups of at least two sensors (C1, C2, C3 ; C4, C5, C6) are used that detect variations in the luminous intensity of the plasma in different optical bands, dispose on either side of the stiffener ; the optical sensors of the two groups being identical, on the one hand the measurement signals supplied by a first pair of identical sensors and on the other hand the measurement signals supplied by the second pair of identical sensors are added; the one of the sums is divided by the other of the two sums, and an insufficient welding seam width is detected, when the result of the division is less than a fourth predefined threshold.

7. A method according to any one of Claims 1 and 2, applied to edge-to-edge welding of two metal plates using a single laser beam, wherein at least two optical sensors are used that detect variations in the luminous intensity of the plasma in different optical bands, the one measurement signal is divided by the other measurement signal of the measurement signals supplied by two of the sensors and an insufficient thickness of the welding seam is detected, when the result obtained is less than a first threshold and an absence of welding, when the result is greater than a second threshold, greater than the first.

8. A method according to any one of the above Claims, wherein the measurement signals are acquired by means of a group of three sensors (C1, C2, C3 ; C4, C5, C6), the sensors of each group detecting the variations in luminous emission of the plasma in a principally ultraviolet frequency band, a principally visible frequency band, and a principally infrared frequency band, respectively.

9. A method according to any one of the above Claims, wherein optical sensors are used (C1, C2, C3 ; C4, C5, C6) are used each comprising a fiberoptic (16-1 to 16-6), of whose first end is arranged in proximity to the welding region, an optical filter (18-1 to 18-6) is disposed in the extension of the second end of the fiberoptic and a photodiode (20-1 to 20-6) is disposed facing the second end o the fiberoptic, on the other side of the filter.

10. A method according to Claim 9, wherein the first end of the fiberoptic is disposed approximately 10 cm form the welding region.

11. A method according to any one of the above Claims, wherein a supplementary measurement signal is obtained by means of another optical sensor (C7), detecting variations in thermal energy of the welding seam in back of the welding region.

12. A method according to Claim 11, wherein the other optical sensor (C7) comprises another fiberoptic (16-7), whose first end is disposed behind the welding region and oriented towards the welding seam and a photodiode (20-7) sensible to thermal radiation is arranged in the extension of the second end of the other fiberoptic.

13. A method according to Claim 12, wherein the first end of the other fiberoptic (16-7) is disposed at a distance of between approximately 10 cm and 20 cm from the welding region.

14. A method according to any one of Claims 12 and 13, wherein an optical focussing means (22-7) is arranged at the first end of the other fiberoptic (16-7).

15. A method according to any one of the above Claims, wherein the measurement signals are combined and are compared to said predefined thresholds after said signals have been acquired in real-time for the welding seam being considered.

16. A method according to Claim 15, wherein the mean, the standardized mean, then the standard deviation of each measurement signal is calculated and a qualitative welding irregularity is diagnosed, when the standard deviation exceeds a predefined value.

17. A method according to Claim 16, wherein the mean of each measurement signal is compared to the previous means of said signal recorded for a given number of welding seams inspected previously and a deterioration in the measurement apparatus is diagnosed, when the mean of the signal has shifted by at least about 30 % relative to the previous means.
